# EUROPEAN PATENT SPECIFICATION

(11) **EP 1 650 273 B1**
(45) Date of publication and mention of the grant of the patent: **19.12.2007**
(21) Application number: 05256375.6
(22) Date of filing: 13.10.2005
(51) Int. Cl.: C09D 11/00, C09B 69/10

(54) **Polymeric colorants having pigment and dye components and corresponding ink compositions**
Polymerische Farbmittel mit Pigment und Farbstoffkomponenten sowie die entsprechenden Tintenzusammensetzungen
Colorants polymères contenant des pigments et colorants et leur compositions d'encre correspondantes

(30) Priority: 25.10.2004 US 622276 P; 14.02.2005 US 58006
(43) Date of publication of application: 26.04.2006
(73) Proprietor: Hewlett-Packard Development Company, L.P., Houston, TX 77070 (US)
(72) Inventor: Vasudevan, Sundar, Corvallis, OR 97330 (US)
(74) Representative: Jackson, Richard Eric

(56) References cited:
- WO-A-01/25340
- WO-A-98/42799
- US-A- 3 337 288
- US-A- 4 880 432
- US-A- 5 786 410

## Description

### CLAIM OF PRIORITY

This application claims the benefit of U.S. Provisional Patent Application No. 60/622,276, filed on October 25, 2004, which is incorporated by reference herein in its entirety.

### FIELD OF THE INVENTION

The present invention relates generally to colorants and methods of making such colorants. More particularly, the present invention relates to compositions including both pigment and dye components.

### BACKGROUND OF THE INVENTION

Colorants are widely used in many applications to provide useful and aesthetic appearance to articles and printed images. Standard colorants can most often be classified as either pigments or dyes. Although such colorants can be directly mixed into an article of manufacture, it is often desirable to prepare ink compositions containing colorants for printing of color images. Such ink compositions typically include a liquid vehicle such as an appropriate solvent containing the dye or the pigment. Dye-based inks generally use a colorant that is soluble in the given liquid vehicle. Conversely, pigmented inks typically use an insoluble dispersed solid colorant to achieve color.

Dye and pigment colorants each have certain properties which are beneficial in certain circumstances and can provide predetermined color properties to a printed image. However, each of dye and pigment colorants also have various limitations and drawbacks which present unique challenges. Specifically, dye colorants exhibit good chroma and long-term stability in solution. However, dye colorants also tend to have poor waterfastness, lightfastness, and smear resistance. In contrast, pigment colorants typically have good waterfastness, good lightfastness, and good smear resistance. Unfortunately, pigment colorants also tend to have limited chroma and a myriad of issues related to maintaining the pigment particles dispersed in solution. Thus, pigment particles of pigment inks can often settle over time.

Thus, the choice of dye and pigment colorants for use in any particular application is often constrained to these limitations and a wide variety of chemical and physical mechanisms are used to minimize these constraints in a particular commercial product. Accordingly, investigations continue into developing colorants and ink formulations that have improved properties which reduce the above-mentioned limitations.

### SUMMARY OF THE INVENTION

It has been recognized that it would be advantageous to develop colorants which have both improved chroma and good waterfastness and lightfastness which are suitable for use in a variety of inks.

In one aspect of the present invention, a polymeric colorant can include a pigment having a polymer covalently attached thereto. Further, a dye can be covalently attached to the polymer. Additionally, a dispersant can be covalently attached to at least one of the pigment, the polymer, and the dye.

Alternatively, an ink-jet ink composition can include a liquid vehicle, a polymer attached dye, and a pigment. The polymer attached dye can include a dye covalently attached to a polymer.

Additional features and advantages of the invention will be apparent from the following detailed description which illustrates, by way of example, features of the invention.

### DETAILED DESCRIPTION OF THE PREFERRED EMBODIMENT(S)

Before particular embodiments of the present invention are disclosed and described, it is to be understood that this invention is not limited to the particular process and materials disclosed herein, as such may vary to some degree. It is also to be understood that the terminology used herein is used for the purpose of describing particular embodiments only and is not intended to be limiting, as the scope of the present invention will be defined only by the appended claims and equivalents thereof.

In describing and claiming the present invention, the following terminology will be used.

The singular forms "a," "an," and "the" include plural referents unless the context clearly dictates otherwise. Thus, for example, reference to "a dye" includes reference to one or more of such materials.

As used herein, "vehicle" is defined to include liquid compositions that can be used to carry colorants to a substrate. Liquid vehicles are well known in the art, and a wide variety of ink vehicles can be used in accordance with embodiments of the present invention. Such ink vehicles can include a mixture of a variety of different agents, including without limitation, surfactants, solvents, co-solvents, buffers, biocides, viscosity modifiers, sequestering agents, stabilizing agents, and water. The liquid vehicle can also carry other additives such as polymers, UV curable materials, plasticizers, and/or cosolvents in some embodiments.

As used herein, "pigment" refers to a colorant particle which is substantially insoluble in the liquid vehicle in which it is used.

As used herein, "dye" refers to a colorant compound which is substantially soluble in the liquid vehicle in which it is used.

As used herein, "functionalized" refers to pigment particles which have a compound chemically attached via covalent bonds. This is in contrast to pigment particles which have compounds attached via ionic bonds or other weaker intermolecular forces.

As used herein, "bleed" refers to the tendency of ink to run into and mix with adjacently printed inks. Bleed typically occurs prior to adjacently printed inks fully drying on a substrate. The degree of bleed will depend on a variety of factors such as the drying speed of the ink, ink chemistry, i.e. the presence of reactive or non-reactive bleed control mechanisms, and type of substrate, among other variables.

As used herein, "waterfastness" refers to an ink's exhibited degree of water resistance after printing on a substrate. Typically, this property is measured after the ink has dried, and measures the tendency of the ink to smear or otherwise change location in the presence of moisture.

As used herein, "chroma" refers to the attribute of color used to indicate the degree of departure of the color from gray of the same lightness as defined by ASTM (ASTM E 284). It is also used to refer to degree of saturation of color which is the ratio of chroma over lightness (C*/L*). Typically, dye colorants have a greater degree of saturation over pigment colorants having the same, or substantially the same, hue.

As used herein, "neutral gray" refers to a shade of gray which exhibits a substantial color constancy, i.e. substantially no change in color appearance when viewed under different light sources such as fluorescent light and sunlight. Further, non-neutral gray colors also tend to have a subtle red or brown shade or appearance.

As used herein, the term "reactive" when referring to ink sets refers to a chemical reaction between two or more ink-jet inks. Such reactive ink sets can interact either by salt mechanisms, pH differential mechanisms, polymerization mechanisms, or other reactive mechanisms known to those skilled in the art.

As used herein, "self-dispersed pigment" refers to pigments that have been functionalized with dispersing agent, such as by chemical attachment or attraction of the dispersing agent to the surface of the pigment. The dispersing agent can be a small molecule or a polymer.

As used herein, "polymer-dispersed pigment" refers to a type of self-dispersed pigment wherein the pigment is attached to or is at least partially encapsulated by a polymer. The polymer can be covalently attached to the pigment surface, either directly or via an intermediate attachment group, or can be attached through non-covalent intermolecular attractive forces.

As used herein with respect to an identified property or circumstance, "substantially the same" allows for a degree of deviation that is sufficiently small so as to not measurably or visibly detract from the identified property or circumstance. The exact degree of deviation allowable may in some cases depend on the specific context. Thus, for example, a colorant which has a color "substantially" that of another colorant may deviate in color, i.e. hue, or other relevant property within a range which is imperceptible or nearly imperceptible upon visual inspection. Of course, other properties can vary considerably. For example, a black pigment can have substantially the same color and hue as a black dye; however, chroma, optical density, gloss, solubility, and the like can differ dramatically from one another. Conversely, identification of a property which is "substantially different" indicates a visible and/or measurable degree of difference.

Concentrations, amounts, and other numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a weight range of about 1% to about 20% should be interpreted to include not only the explicitly recited concentration limits of 1% to about 20%, but also to include individual concentrations such as 2%, 3%, 4%, and sub-ranges such as 5% to 15%, 10% to 20%, etc.

In accordance with the present invention, a polymeric colorant can include a pigment having a polymer covalently attached thereto. Further, a dye can be covalently attached to the polymer. A dispersant can be covalently attached to at least one of the pigment, the polymer, and the dye to provide dispersion stability to the polymeric colorant in a liquid vehicle. By including both a pigment and a dye component, the polymeric colorant can benefit from the properties of each. The dye and pigment components can be substantially the same color, or can be of different colors, depending on the desired appearance. The polymeric colorants of the present invention are well suited to inclusion in ink-jet compositions, although many other applications are considered suitable for the instant polymeric colorants.

Alternatively, an ink-jet ink composition can include a liquid vehicle, a polymer attached dye, and a pigment. The polymer attached dye can include a dye covalently attached to a polymer, with the dye having a first color. Further, the pigment can have a second color which is substantially different in hue from the first color. In this alternative aspect, the pigment can be self-dispersed, polymer-dispersed, or covalently attached to the polymer.

### Polymeric Colorants

The polymeric colorants of the present invention can include a wide variety of polymers which can be covalently attached to dyes and/or pigments in accordance with the principles described herein. Polymers containing a reactive group such as anhydrides, carboxylic acids, sulfonic acids, vinyl sulfones, amines, alcohols, thiols, or the like are exemplary of suitable polymers. Non-limiting examples of specific polymers which can be used include maleic anhydride copolymers, acrylic copolymers, methacrylic copolymers, amine or alcohol-containing copolymers, and combinations thereof. In one aspect, the polymer can include an anhydride group configured for reaction with the reactive group of the dye. In another aspect, the polymer can include a carboxylic acid group which can serve as a point of attachment for the dye and optional additional groups, e.g., linking groups, lightfastness enhancing groups, dispersants, and the like.

In one aspect, suitable polymers can include, but are not limited to, styrene-maleic anhydride copolymer, methyl vinyl ether-maleic anhydride copolymer, vinyl pyrrolidone-maleic anhydride copolymer, styrene acrylic acid copolymer, styrene methacrylic acid copolymer, 4-vinylaniline-acrylic acid copolymer, 4-vinylaniline-methacrylic acid copolymer, and combinations thereof. In one specific aspect of the present invention, the polymer can be a maleic anhydride copolymer such as, but not limited to, styrene-maleic anhydride copolymer, methyl vinyl ether-maleic anhydride copolymer, vinyl pyrrolidone-maleic anhydride copolymer, and combinations thereof. One polymer which has proven particularly useful is styrene maleic anhydride copolymer (SMA). Other specific polymers can include styrene-acrylics, polyethylene imine/phthalic anhydrides, polyethylene imine/phenylsuccinic anhydrides, polyethylene imine/succinic anhydrides, pentaethylene hexamines, polyethylene imines, polyurethanes, polyureas, acrylic polymers, vinyl polymers, polypyrrolidones, epoxies, polyesters, polysaccharides, polypeptides, celluloses, polyquaternary amines, polyamines, and copolymers thereof. Further, polymers capable of dispersing pigments at near neutral pH such as those containing sulfonic acids, fluoric acids, and α- and/or β-fluorocarboxylic acids. Several specific examples of such polymers can include styrene-vinylsulfonic acid copolymers, styrene-butyl acrylate-methacrylic acid-vinylsulfonic acid copolymers, styrene-trifluoroacrylic acid-vinylsulfonic acid copolymers, styrene-α-(trifluoromethyl)acrylic acid-vinylsulfonic acid copolymers, styrene-trifluoro acrylic acid copolymers, and the like.

The polymeric colorants of the present invention can include a dye which is covalently attached to the polymer. In one aspect, the dye can be covalently attached to the polymer prior to attachment to the pigment, although this is not required. Suitable dyes can have an active group which can be reacted to form bonds with a particular polymer to form a polymer-dye colorant. A number of dyes can be suitable for this purpose. Particularly, dyes having active groups such as hydroxy, amine, carboxylic acid, sulfonic acid, thiol, halotriazine, maleimide and vinyl sulfone, and combinations thereof can readily form covalent bonds with suitable polymers. Alternatively, dyes having active groups such as carboxyl, sulfonyl, or the like can be reacted with polymers having amino or hydroxyl groups. Thus, the reactive and active groups mentioned above can be present in either the dye or the polymer, depending on a specific embodiment. The dyes and the polymers can also include other functional groups that can be readily converted to any of the above mentioned groups so that the dye and polymer can be coupled after such conversion. Those skilled in the art will recognize various coupling reactions and associated reactive groups necessary to couple a wide variety of dyes and polymers. In one specific aspect, dyes having aliphatic amine active groups can be readily attached to polymers having anhydride, carboxyl, sulfonyl, and similar groups. Non-limiting examples of suitable dyes can include food dyes, FD&C dyes, acid dyes, direct dyes, reactive dyes, phthalocyanine dyes, derivatives of phthalocyanine sulfonic acids, and combinations thereof. Several specific examples of suitable dyes can include C.I. Acid Red 440, C.I. Reactive Red 3, C.I. Reactive Red 13, C.I. Reactive Red 23, C.I. Reactive Red 24, C.I. Reactive Red 33, C.I. Reactive Red 43, C.I. Reactive Red 45, C.I. Reactive Red 120, C.I. Reactive Red 180, C.I. Reactive Red 194, C.I. Reactive Red 220, C.I. Reactive Violet 4, C.I. Reactive Blue 19, C.I. Reactive Blue 5, C.I. Reactive Blue 49, C.I. Reactive Yellow 2, C.I. Reactive Yellow 3, C.I. Reactive Black 39, and combinations thereof.

Further, dyes having active groups such as alcohols and aromatic amines tend to not be very nucleophilic. Therefore, attachment of the dye to the polymer can be enhanced by addition of a nucleophilic catalyst such as, but not limited to, dimethylaminopyridine, N-methylimidazole, and the like. Additionally, reactive dyes such as those having vinyl sulfone groups can be attached via a dye linking group such as a thiol, e.g., using Michael addition chemistry as known to those skilled in the art. For example, 2-aminoethanethiol can be reacted with a polymer having an anhydride or other reactive group. The thiol group can then be reacted with a reactive dye in the presence of sodium hydroxide to form a polymer attached dye colorant.

In another alternative embodiment of the present invention, a dye can be attached to a monomer which can be subsequently copolymerized to form a polymer in accordance with the present invention. The polymers disclosed above can be suitable for such an embodiment. For example, methacrylate functionalized dyes can be copolymerized with monomers such as styrene, maleic anhydride, acrylic acid, methacrylic acid, or the like. Examples of such methacrylate functionalized dyes are described in more detail in U.S. Patent Application Publication 2004/0024100, which is incorporated herein by reference.

The extent of attachment of dye molecules to each polymer chain can vary depending on reaction conditions, the polymer, and the dye. However, as a general guideline, the dye to polymer chain ratio can range from about 0.05 mmol/g to 10 mmol/g, and often from about 1 mmol/g to about 5 mmol/g, i.e. mmol of dye molecules per gram of polymer. Thus, the number of dye molecules per pigment particle can range from about 10 µmole dye molecules per gram of pigment to about 100 mmole per gram of pigment, and in some cases from about 0.05 mmole dye per gram of pigment to about 2 mmole per gram pigment.

In one alternative embodiment, the polymer can include more than one type of dye covalently attached thereto. Attachment of additional dyes can be performed simultaneously with attachment of a first dye, or can be attached in subsequent steps. Further, the additional dyes can be substantially the same color as the first dye. Such additional dyes can be used to affect any number of properties such as dispersion stability, pH, lightfastness, cost, and/or the like. Optionally, the additional dye(s) can have a substantially different color than the first dye. For example, a hue angle difference of 75 degrees or more would clearly indicate a substantially different color. As a guideline, hue angle differences are roughly 90 degrees from red to yellow, yellow to green, and green to blue.

Many commonly known pigments can be covalently attached using the polymers and methods of the present invention. Specifically, various pigments can be functionalized with a suitable chemical moiety which can be directly attached to the polymer or attached to the polymer through a linking group. Such methods of functionalizing pigments are known to those skilled in the art. For example, U.S. Patent Nos. 5,554,739; 5,707,432; and 5,851,280, and U.S. Patent Application Nos. 2003/0195291, 2003/0213410, 2003/0217672, and 2004/0007152 disclose methods of functionalizing pigments using a number of methods, each of which is hereby incorporated by reference in their entirety.

Non-limiting examples of common linking groups and functional groups attached to pigments can include 2-(4-aminophenyl) sulfonylethane sulfonate, diazonium salt reaction products, 4- aminobenzylamine, 4-aminophenylalanine, and other nucleophilic groups. Optionally, certain polymers can be directly attached to a functionalized pigment. For example, polymers including an aminophenyl group could be directly attached to pigments after diazotization. An example of such a polymer would be a styrene acrylate polymer where some of the styrene monomers are replaced by 4-aminostyrene, i.e. 4-vinylaniline. Frequently, it can also be desirable to introduce a linking active group to the polymer to facilitate attachment of the linking group thereto. For example, the polymer can be reacted with 2-aminoethanethiol to form a thiol group which can then be used to attach to the pigment functionalized with 2-(4-aminophenyl) sulfonylethane sulfonate. Other linking active groups can include, but is in no way limited to, anhydrides, amines, or the like.

Although the exact ratio can vary somewhat, typically, the pigment particle to polymer chain weight ratio can be from about 10:1 to 1:10. In addition, attachment of the dye to the polymer, rather than directly to the pigment, allows for increased availability of pigment surface area for polymeric dispersant (either covalently attached or encapsulating), polymer-dye colorant of the present invention, and/or other useful additives. Thus, the amount of dye can be increased without decreasing the ability to provide dispersant for stability of the pigment particles.

Suitable pigments can be black pigments, white pigments, cyan pigments, magenta pigments, yellow pigments, or the like. Further, pigments can be organic or inorganic particles as is well known in the art. Suitable inorganic pigments include, for example, carbon black. However, other inorganic pigments may be suitable such as titanium oxide, cobalt blue (CoO-Al₂O₃), chrome yellow (PbCrO₄), and iron oxide. Suitable organic pigments includes, for example, azo pigments including diazo pigments and monoazo pigments, polycyclic pigments (e.g., phthalocyanine pigments such as phthalocyanine blues and phthalocyanine greens, perylene pigments, perynone pigments, anthraquinone pigments, quinacridone pigments, dioxazine pigments, thioindigo pigments, isoindolinone pigments, pyranthrone pigments, and quinophthalone pigments), insoluble dye chelates (e.g., basic dye type chelates and acidic dye type chelate), nitropigments, nitroso pigments, and the like. Representative examples of phthalocyanine blues include copper phthalocyanine blue and derivatives thereof (Pigment Blue 15). Representative examples of quinacridones include Pigment Orange 48, Pigment Orange 49, Pigment Red 122, Pigment Red 192, Pigment Red 202, Pigment Red 206, Pigment Red 207, Pigment Red 209, Pigment Violet 19 and Pigment Violet 42. Representative examples of anthraquinones include Pigment Red 43, Pigment Red 194 (Perinone Red), Pigment Red 216 (Brominated Pyranthrone Red) and Pigment Red 226 (Pyranthrone Red). Representative examples of perylenes include Pigment Red 123 (Vermillion), Pigment Red 149 (Scarlet), Pigment Red 179 (Maroon), Pigment Red 190 (Red), Pigment Violet 19, Pigment Red 189 (Yellow Shade Red) and Pigment Red 224. Representative examples of thioindigoids include Pigment Red 86, Pigment Red 87, Pigment Red 88, Pigment Red 181, Pigment Red 198, Pigment Violet 36, and Pigment Violet 38. Representative examples of heterocyclic yellows include Pigment Yellow 1, Pigment Yellow 3, Pigment Yellow 12, Pigment Yellow 13, Pigment Yellow 14, Pigment Yellow 17, Pigment Yellow 65, Pigment Yellow 73, Pigment Yellow 74, Pigment Yellow 151, Pigment Yellow 117, Pigment Yellow 128 and Pigment Yellow 138. Such pigments are commercially available in either powder or press cake form from a number of sources including, BASF Corporation, Engelhard Corporation and Sun Chemical Corporation.

Examples of black pigments that can be used include carbon pigments. The carbon pigment can be almost any commercially available carbon pigment that provides acceptable optical density and print characteristics. Carbon pigments suitable for use in the present invention include, without limitation, carbon black, graphite, vitreous carbon, charcoal, and combinations thereof. Such carbon pigments can be manufactured by a variety of known methods such as a channel method, a contact method, a furnace method, an acetylene method, or a thermal method, and are commercially available from such vendors as Cabot Corporation, Columbian Chemicals Company, Degussa AG, and E.I. DuPont de Nemours and Company. Suitable carbon black pigments include, without limitation, Cabot pigments such as MONARCH 1400, MONARCH 1300, MONARCH 1100, MONARCH 1000, MONARCH 900, MONARCH 880, MONARCH 800, MONARCH 700, CAB-O-JET 200, CAB-O-JET 300, REGAL, BLACK PEARLS, ELFTEX, MOGUL, and VULCAN pigments; Columbian pigments such as RAVEN 7000, RAVEN 5750, RAVEN 5250, RAVEN 5000, and RAVEN 3500; Degussa pigments such as Color Black FW 200, RAVEN FW 2, RAVEN FW 2V, RAVEN FW 1, RAVEN FW 18, RAVEN S160, RAVEN FW S170, Special Black 6, Special Black 5, Special Black 4A, Special Black 4, PRINTEX U, PRINTEX 140U, PRINTEX V, and PRINTEX 140V; and TIPURE R-101 available from Dupont. The above list of pigments includes unmodified pigment particulates, small molecule attached pigment particulates, and polymer-dispersed pigment particulates.

Similarly, a wide variety of colored pigments can be used with the present invention, therefore the following listing is not intended to be limiting. For example, colored pigments can be blue, brown, cyan, green, white, violet, magenta, red, orange, yellow, as well as mixtures thereof. The following color pigments are available from Cabot Corp.: CABO-JET 250C, CABO-JET 260M, and CABO-JET 270Y. The following color pigments are available from BASF Corp.: PALIOGEN Orange, PALIOGEN Orange 3040, PALIOGEN Blue L 6470, PALIOGEN Violet 5100, PALIOGEN Violet 5890, PALIOGEN Yellow 1520, PALIOGEN Yellow 1560, PALIOGEN Red 3871K, PALIOGEN Red 3340, HELIOGEN Blue L 6901 F, HELIOGEN Blue NBD 7010, HELIOGEN Blue K 7090, HELIOGEN Blue L 7101 F, HELIOGEN Blue L6900, L7020, HELIOGEN Blue D6840, HELIOGEN Blue D7080, HELIOGEN Green L8730, HELIOGEN Green K 8683, and HELIOGEN Green L 9140. The following pigments are available from Ciba-Geigy Corp.: CHROMOPHTAL Yellow 3G, CHROMOPHTAL Yellow GR, CHROMOPHTAL Yellow 8G, IGRAZIN Yellow 5GT, IGRALITE Rubine 4BL, IGRALITE Blue BCA, MONASTRAL Magenta, MONASTRAL Scarlet, MONASTRAL Violet R, MONASTRAL Red B, and MONASTRAL Violet Maroon B. The following pigments are available from Heubach Group: DALAMAR Yellow YT-858-D and HEUCOPHTHAL Blue G XBT-583D. The following pigments are available from Hoechst Specialty Chemicals: Permanent Yellow GR, Permanent Yellow G, Permanent Yellow DHG, Permanent Yellow NCG-71, Permanent Yellow GG, Hansa Yellow RA, Hansa Brilliant Yellow 5GX-02, Hansa Yellow-X, NOVOPERM Yellow HR, NOVOPERM Yellow FGL, Hansa Brilliant Yellow 10GX, Permanent Yellow G3R-01, HOSTAPERM Yellow H4G, HOSTAPERM Yellow H3G, HOSTAPERM Orange GR, HOSTAPERM Scarlet GO, HOSTAPERM Pink E, Permanent Rubine F6B, and the HOSTAFINE series. The following pigments are available from Mobay Corp.: QUINDO Magenta, INDOFAST Brilliant Scarlet, QUINDO Red R6700, QUINDO Red R6713, and INDOFAST Violet. The following pigments are available from Sun Chemical Corp.: L74-1357 Yellow, L75-1331 Yellow, and L75-2577 Yellow. Other examples of pigments can include Normandy Magenta RD-2400, Permanent Violet VT2645, Argyle Green XP-111-S, Brilliant Green Toner GR 0991, Sudan Blue OS, PV Fast Blue B2GO1 Sudan III, Sudan II, Sudan IV, Sudan Orange G, Sudan Orange 220, Ortho Orange OR 2673, Lithol Fast Yellow 0991 K, Paliotol Yellow 1840, Lumogen Yellow D0790, Suco-Gelb L1250, Suco- Yellow D1355, Fanal Pink D4830, Cinquasia Magenta, Lithol Scarlet D3700, Toluidine Red, Scarlet for Thermoplast NSD PS PA, E. D. Toluidine Red, Lithol Rubine Toner, Lithol Scarlet 4440, Bon Red C, Royal Brilliant Red RD-8192, Oracet Pink RF, and Lithol Fast Scarlet L4300. These pigments are available from commercial sources such as Hoechst Celanese Corporation, Paul Uhlich, BASF, American Hoechst, Ciba-Geigy, Aldrich, DuPont, Ugine Kuhlman of Canada, Dominion Color Company, Magruder, and Matheson. Examples of other suitable colored pigments are described in the Colour Index, 3rd edition (The Society of Dyers and Colourists, 1982).

Other pigments not specifically listed can also be suitable for attachment to the polymers based on the disclosure provided herein. The above-illustrated pigments can be used singly or in combination of two or more. Typically, the pigments of the present invention can be from about 10 nm to about 10 µm and in one aspect can be from 10 nm to about 500 nm in diameter, although sizes outside this range can be used if the pigment can remain dispersed and provide adequate color properties. In one detailed aspect of the present invention, the pigment can comprise from about 1% to about 20% by weight of the ink-jet ink composition, and often can comprise from about 2% to about 5% by weight of the ink-jet ink composition.

Frequently, the pigment and the dye can have substantially the same color. In this way, the polymeric colorant can have improved chroma resulting from the presence of dye, while also improving lightfastness, waterfastness, and permanence as a result of the pigment. In one alternative aspect of the present invention, the pigment can be a different color than the dye. For example, the pigment can have a black color and the dye can have a cyan or magenta color such that the polymeric colorant has an effective color which is a neutral gray. Alternatively, both cyan and magenta dyes can be covalently attached to the same polymer or separate polymers which are then attached to the same pigment. Thus, as a general matter, more than one type of dye can be attached to the same polymer chains. Additionally, more than one type of polymer and or polymer-dye combinations can be attached to the pigment particles.

The polymeric colorants of the present invention can further include a dispersant attached thereto. Suitable dispersants can be attached to the pigment, the polymer, and/or the dye. In one specific embodiment, the dispersant can be attached to the pigment. Attaching the polymer to the pigment in accordance with the present invention in many cases provides additional room for attachment of a dispersant directly to the pigment. In other embodiments, it can be desirable to attach dispersant to the polymer. In order to attach dispersant to the polymer, reactive groups similar to those used for attachment of the dye can be useful. Further, the dispersant can be attached simultaneously with the dye, or in a separate step. Generally, the order of attachment of the dye, dispersant, and the pigment can be adjusted to suit a particular manufacturing design. Often, the order of attachment is not critical; however, most often the pigment can be attached in a final processing step to a polymer-dye colorant having a dispersant attached thereto. Most often, the reactive group can be a carboxylic acid, however, reactive groups such as hydroxy, amino, anhydride, sulfonic acid, thiol, halotriazine, maleimide and vinyl sulfone, or the like can also be used.

A wide variety of dispersants are known to those skilled in the art which can also be useful for attachment to the polymeric dyes of the present invention. Non-limiting examples broad classes of suitable dispersants include polyalkyl glycols, polyalkyl imines, aryl dicarboxylic acids such as phthalic acids, isophthalic acids, terephthalic acids, carbohydrates, acrylates, methacrylates, trehalose, isomers thereof, and combinations thereof. As a general matter, glycol dispersants tend to be stable at neutral and higher pH, while imine dispersants tend to be stable at lower pH, e.g., about 4-6. In one specific embodiment, the dispersant can be polyethylene glycol. Dispersants can help to improve dispersion stability, but also can improve bleed control. Non-limiting examples of several specific suitable dispersants include polypropylene glycol, polyethylene imine, polyethylene glycol, trehalose, and combinations thereof. In some embodiments, the polymer having a dye attached thereto can also be a dispersant, such that the pigment is polymer-dispersed.

In an additional optional embodiment of the present invention, the polymeric colorant can include various stabilizing additives. Such stabilizing additives can be any functional group which provides improved lightfastness, ozone fastness, steric stabilization, electrostatic stabilization, or the like. Specific non-limiting examples of suitable stabilizing additives include PEG (steric stabilization and improving solubility of certain dyes), carbohydrates (steric stabilization), polyethylene imine (electrosteric stabilization generally at acidic pH), acrylates (electrosteric stabilization generally at high pH), or the like. An additional benefit of the present invention is to provide improved protection of the dye from light fade and/or degradation due to exposure to air. This can be at least partially due to a majority of the dye being embedded in the polymer to which it is attached and embedded by neighboring polymer chains.

As a general matter, polymeric colorants of the present invention can have the structure as described above. However, in one specific embodiment, the polymeric colorant can have the general structure shown in Formula 1, which is based on maleic anhydride copolymers. 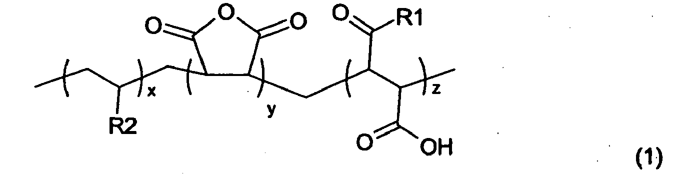 where x, y, and z are non-zero positive integers such that the polymer has a molecular weight less than about 20,000; R1 is the dye, the dispersant, or a linking group attached to the pigment with the proviso that z is at least three and at least one of each of the dye, the dispersant, and the linking group is present; and R2 is a hydrophobic group. It will be understood that the above structure does not necessarily indicate a block copolymer. Rather, for convenience the polymeric units are segregated and actual embodiments can be random copolymers, block copolymers, or any other arrangement of the monomeric units shown. R2 can be provided using any number of hydrophobic monomers such as styrene, 4-alkylstyrene, alkyl acrylates, methacrylates, methyl vinyl ether, alkyl vinyl ether, vinyl acetate, vinyl pyrrolidone, or the like. Further, when using maleic anhydride copolymers as shown in Formula 1, the monomeric units of group z are generally provided by reaction of the R1 group, i.e. dye, additive, or dispersant, with the anhydride portion of the maleic anhydride. Thus, the original number of maleic anhydride units is reduced by z, leaving y units of maleic anhydride during manufacture of the polymeric colorants of the present invention.

In yet another more detailed aspect, the polymeric colorant can have the general structure: 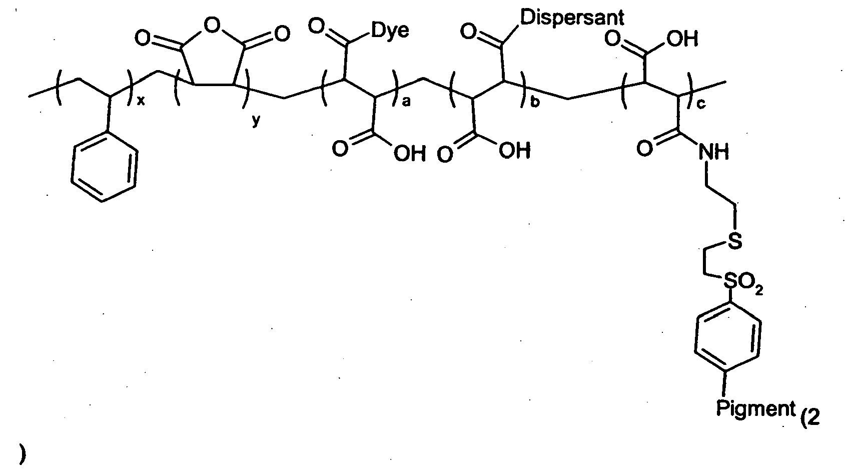 where a, b, and c are non-zero positive integers such that the polymer has a molecular weight less than about 20,000.

### Ink-jet Ink Compositions

The polymeric colorants of the present invention can be used in a wide variety of applications such as, but not limited to, ink compositions, molded articles, or the like. In one aspect, the polymeric colorants of the present invention can be included as part of an ink-jet ink composition. As such, the polymeric colorant, as described herein, can be dispersed in an appropriate liquid vehicle.

In yet another alternative embodiment, an ink-jet ink composition can include a liquid vehicle, a polymer attached dye, and a pigment. In this embodiment, the polymer attached dye can include a dye covalently attached to a polymer, with the dye having a first color. The pigment can have a second color which is substantially different in hue from the first color.

In such cases, the pigment is not necessarily attached to the dye and can be dispersed in accordance with known principles. Thus, the pigment can be polymer-dispersed, self-dispersed, or covalently attached to the polymer attached dye to form a polymeric colorant. In a further detailed aspect of this embodiment, the polymer can have at least two different dyes covalently attached to the polymer. In one aspect, the dye color can be cyan, magenta, or yellow and the pigment color can be black.

Ink-jettable ink compositions of the present invention are typically prepared in an aqueous formulation or ink vehicle which can include water, cosolvents, surfactants, buffering agents, biocides, sequestering agents, viscosity modifiers, humectants, binders, plasticizers, fixers, and/or other known additives. Further, the present invention can be used in conjunction with reactive ink sets for enhanced bleed control. Typically, the ink-jet ink compositions of the present invention can have a viscosity of between about 0.8 to about 8 cps. In one aspect of the present invention, the ink vehicle can comprise from about 70% to about 98% by weight of the ink-jet ink composition.

As described, cosolvents can be included in the ink-jet compositions of the present invention. Suitable cosolvents for use in the present invention include water soluble organic cosolvents, but are not limited to, aliphatic alcohols, aromatic alcohols, diols, glycol ethers, poly(glycol) ethers, lactams, formamides, acetamides, long chain alcohols, ethylene glycol, propylene glycol, diethylene glycols, triethylene glycols, glycerine, dipropylene glycols, glycol butyl ethers, polyethylene glycols, polypropylene glycols, amides, ethers, carboxylic acids, esters, organosulfides, organosulfoxides, sulfones, alcohol derivatives, carbitol, butyl carbitol, cellosolve, ether derivatives, amino alcohols, and ketones. For example, cosolvents can include primary aliphatic alcohols of 30 carbons or less, primary aromatic alcohols of 30 carbons or less, secondary aliphatic alcohols of 30 carbons or less, secondary aromatic alcohols of 30 carbons or less, 1,2-diols of 30 carbons or less, 1,3-diols of 30 carbons or less, 1,5-diols of 30 carbons or less, ethylene glycol alkyl ethers, propylene glycol alkyl ethers, poly(ethylene glycol) alkyl ethers, higher homologs of poly(ethylene glycol) alkyl ethers, poly(propylene glycol) alkyl ethers, higher homologs of poly(propylene glycol) alkyl ethers, lactams, substituted formamides, unsubstituted formamides, substituted acetamides, and unsubstituted acetamides. Specific examples of cosolvents that are preferably employed in the practice of this invention include, but are not limited to, 1,5-pentanediol, 2-pyrrolidone, 2-ethyl-2-hydroxymethyl-1,3-propanediol, diethylene glycol, 3-methoxybutanol, and 1,3-dimethyl-2-imidazolidinone. Cosolvents can be added to reduce the rate of evaporation of water in the ink to minimize clogging or other properties of the ink such as viscosity, pH, surface tension, optical density, and print quality. The cosolvent concentration can range from about 0% to about 50 wt %.

Various buffering agents can also be optionally used in the ink-jet ink compositions of the present invention. Typical buffering agents include such pH control solutions as hydroxides of alkali metals and amines, such as lithium hydroxide, sodium hydroxide, potassium hydroxide; citric acid; amines such as triethanolamine, diethanolamine, and dimethylethanolamine; and other basic or acidic components which do not interfere with the colorant characteristics of the present invention. If used, buffering agents typically comprise less than about 10% by weight of the ink-jet ink composition.

In another aspect of the present invention, various biocides can be used to inhibit growth of undesirable microorganisms. Several non-limiting examples of suitable biocides include benzoate salts, sorbate salts, commercial products such as NUOSEPT (Nudex, Inc., a division of Huls America), UCARCIDE (Union Carbide), VANCIDE (RT Vanderbilt Co.), and PROXEL (ICI Americas) and other known biocides. Typically, such biocides comprise less than about 5% by weight of the ink-jet ink composition and often from about 0.1 % to about 0.25% by weight.

In an additional aspect of the present invention, binders can be included which act to secure the polymeric colorants on the substrate. Binders suitable for use in the present invention typically have a molecular weight of from about 100 to about 50,000 g/mol. Non-limiting examples include polyester, polyester-melanine, styrene-acrylic acid copolymers, styrene-acrylic acid-alkyl acrylate copolymers, styrene-maleic acid copolymers, styrene-maleic acid-alkyl acrylate copolymers, styrene-methacrylic acid copolymers, styrene-methacrylic acid-alkyl acrylate copolymers, styrene-maleic half ester copolymers, vinyl naphthalene-acrylic acid copolymers, vinyl naphthalene-maleic acid copolymers, and salts thereof.

Standard water-soluble surfactants can also be optionally used such as alkyl polyethylene oxides, alkyl phenyl polyethylene oxides, polyethylene oxide (PEO) block copolymers, acetylenic PEO, PEO esters, PEO amines, PEO amides, and dimethicone copolyols. Some of these materials are available commercially under the tradenames TERGITOL, SURFYNOL, ZONYL, TRITON, MERPOL, and the like. If used, surfactants can be from 0.01 % to about 10% by weight of the ink-jet ink composition.

Once the ink-jet ink compositions are prepared, they can be placed into one or more ink-jet pens as is well known in the art. In one detailed aspect of the present invention, a system for printing images on a substrate in accordance with the present invention can include at least one firing chamber containing ink-jet ink compositions, respectively, to form an ink-jet pen. Typical ink-jet pens can have an orifice plate having a plurality of orifices through which the ink-jet ink composition can be delivered to a substrate using thermal, piezoelectric, or other known ink-jet technologies.

### EXAMPLES

The following examples illustrate the embodiments of the invention that are presently best known. However, it is to be understood that the following are only exemplary or illustrative of the application of the principles of the present invention. Numerous modifications and alternative compositions, methods, and systems may be devised by those skilled in the art without departing from the spirit and scope of the present invention. The appended claims are intended to cover such modifications and arrangements. Thus, while the present invention has been described above with particularity, the following Examples provide further detail in connection with what are presently deemed to be the most practical and preferred embodiments of the invention.

### Example 1

C.I. Acid Red 440 dye can be attached to styrene maleic anhydride polymer (SMA 1000) as follows. To 1 liter of dry DMF in a flask under a nitrogen atmosphere is added 110 g (544 mmole anhydride) of SMA 1000. The suspension can be heated to 50 °C with stirring to give a clear solution. To this solution under nitrogen is added 80.4 g (220 mmole) of AR 440 dye, 22.3 g (220 mmole) of triethylamine and 2.7 g (22 mmole) of dimethylaminopyridine. The mixture is stirred for at least 4 hours at this temperature. To this mixture is added 36.4 g (320 mmole) of 2-aminoethanethiol hydrochloride followed by 64.8 g (640 mmole) of triethylamine. The mixture is stirred overnight while it cools down to room temperature under a nitrogen atmosphere. The mixture is then added to an excess of ice cold 1 N hydrochloric acid. This results in precipitation of a bluish red polymer-dye conjugate. The precipitate is filtered and washed several times with 1 N HCI followed by deionized water. The mixture is then dried in a vacuum desiccator at room temperature.

Conjugation of the above dye-polymer conjugate to pigment red 122 is accomplished as follows. To a stirred solution of 100 mL of 1 N NaOH under nitrogen is added 20 g of the polymer-dye conjugate described above. The mixture is heated to 50 °C to ensure complete dissolution. To the clear magenta solution is added 400 g of a 10% aqueous dispersion of pigment red 122 having been modified with 2-(4-aminophenyl) sulfonylethane sulfonate. The pH is raised to about 12-13 by an additional 25 ml of 1 N NaOH and the mixture will is stirred overnight at room temperature under a nitrogen atmosphere. The resultant dispersion is capped with sodium acrylate and purified by diafiltration.

### Example 2

To 1 liter of dry DMF in a reaction flask under a nitrogen atmosphere is added 110 g (544 mmole anhydride) of SMA 1000. The suspension is heated to 50 °C while stirring to give a clear solution. To this solution is added 45.4 g (400 mmole) of 2-aminoethanethiol hydrochloride and 100 g (100 mmole) of JEFFAMINE XTJ506 (a polyoxyalkyleneamine dispersant available from Huntsman Corporation) and the mixture is stirred under nitrogen atmosphere for about 30 minutes. Then 101.2 g (1 mole) of triethylamine is added in a dropwise fashion. The mixture is then allowed to cool to room temperature and stirred overnight under a nitrogen atmosphere. The mixture is then added to an excess of ice cold 1 N hydrochloric acid. This results in a white polymer precipitate. The precipitate is filtered and washed several times with 1 N HCl followed by deionized water. The mixture is then dried in a vacuum desiccator at room temperature.

To a stirred solution of 700 mL of 1 N NaOH under nitrogen is added 140 g of the modified SMA polymer described above. The mixture is heated to 50 °C to ensure complete dissolution. To the solution is added 502 g (80 mmole) of a 10% aqueous solution of reactive blue 19 dye over 10 minutes. The pH is raised to 12-13 by addition of 150 ml of 1 N NaOH and the mixture is stirred overnight at room temperature under a nitrogen atmosphere. The mixture is then added to an excess of ice cold 1 N hydrochloric acid. This results in a blue precipitate of dye-polymer conjugate. The precipitate is filtered and washed several times with 1 N HCl followed by deionized water. The mixture is then dried in a vacuum desiccator at room temperature.

Conjugation of the above dye-polymer conjugate to carbon black pigment can be accomplished as follows. To a stirred solution of 100 mL of 1 N NaOH under nitrogen is added 20 g of the dye-polymer conjugate described above. The mixture is heated to 50°C to ensure complete dissolution. To the clear blue solution is added 400 g of a 10% aqueous dispersion of carbon black having been modified with 2-(4-aminophenyl) sulfonylethane sulfonate. The pH is raised to 12-13 by the addition of 25 ml of 1 N NaOH and the mixture is stirred overnight at room temperature under nitrogen atmosphere. The resultant dispersion is capped with sodium acrylate and purified by diafiltration.

It is to be understood that the above-referenced arrangements are illustrative of the application for the principles of the present invention. Numerous modifications and alternative arrangements can be devised without departing from the spirit and scope of the present invention while the present invention has been shown in the drawings and described above in connection with the exemplary embodiments(s) of the invention. It will be apparent to those of ordinary skill in the art that numerous modifications can be made without departing from the principles and concepts of the invention as set forth in the claims.

## Claims

1. A polymeric colorant, comprising:
a) a pigment having a polymer covalently attached thereto;
b) a first dye covalently attached to the polymer; and
c) a dispersant covalently attached to at least one of the pigment, the polymer, and the first dye.

2. The colorant of claim 1, wherein the polymer is a member selected from the group consisting of maleic anhydride copolymers, acrylic copolymers, methacrylic copolymers, amine or alcohol-containing copolymers, and combinations thereof.

3. The colorant of claim 1, wherein the polymer is selected from the group consisting of styrene-maleic anhydride copolymer, methyl vinyl ether-maleic anhydride copolymer, vinyl pyrrolidone-maleic anhydride copolymer, styrene acrylic acid copolymer, styrene methacrylic acid copolymer, 4-vinylaniline-acrylic acid copolymer, 4-vinylaniline-methacrylic acid copolymer, and combinations thereof.

4. The colorant of claim 1, wherein the polymer is attached to the pigment through a linking group.

5. The colorant of claim 1, further comprising a second dye covalently attached to the polymer.

6. The colorant of claim 5, wherein the second dye is a different color than the first dye.

7. The colorant of claim 1, wherein the pigment is a different color than the first dye.

8. The colorant of claim 1, wherein the dispersant is attached to the pigment.

9. The colorant of claim 1, wherein the dispersant is attached to the polymer.

10. The colorant of claim 1, wherein the polymeric colorant has a ratio of dye molecules per weight of pigment particle from about 10 µmole per gram to about 100 mmole per gram.

11. The colorant of claim 1, further comprising a stabilizing additive.

12. An ink-jet system, comprising:
a) an ink-jet ink composition, including:
i) a liquid vehicle;
ii) a polymer attached dye including a dye covalently attached to a polymer, said dye having a first color; and
iii) a pigment having a second color which has a substantially different hue from the first color; and
b) an ink-jet pen including a firing chamber containing the ink-jet ink composition.

13. The system of claim 12, wherein the pigment is polymer-dispersed.

14. The system of claim 12, wherein the pigment is covalently attached to the polymer to form a polymeric colorant.

15. The system of claim 12, further comprising at least two different dyes covalently attached to the polymer.

16. A method of forming a polymeric colorant, comprising the steps of:
a) attaching a dye to a polymer to form a polymer-dye colorant;
b) attaching the polymer to a pigment; and
c) attaching a dispersant to at least one of the polymer-dye colorant and the pigment.

17. The method of claim 16, wherein said polymer includes an anhydride group configured for reaction with the reactive group.

18. The method of claim 16, wherein the dispersant is attached to the polymer or the pigment prior to attaching the dye to the polymer.

19. The method of claim 16, wherein the dye is attached to the polymer prior to attaching the polymer to the pigment.

## Patentansprüche

1. Ein polymeres Farbmittel, das folgende Merkmale aufweist:
a) ein Pigment, das ein kovalent an dasselbe angelagertes Polymer aufweist;
b) einen kovalent an das Polymer angelagerten ersten Farbstoff; und
c) ein kovalent an zumindest entweder das Pigment, das Polymer und/oder den ersten Farbstoff angelagertes Dispersionsmittel.

2. Das Farbmittel gemäß Anspruch 1, bei dem das Polymer ein Glied ist, das aus der Gruppe ausgewählt ist, die aus Maleinsäureanhydrid-Copolymeren, Acryl-Copolymeren, Methacryl-Copolymeren, Amin oder Alkohol enthaltenden Copolymeren und Kombinationen derselben besteht.

3. Das Farbmittel gemäß Anspruch 1, bei dem das Polymer aus der Gruppe ausgewählt ist, die aus Styren-Maleinsäureanhydrid-Copolymer, Methylvinylether-Maleinsäureanhydrid-Copolymer, Vinylpyrrolidon-Maleinsäureanhydrid-Copolymer, Styren-Acrylsäure-Copolymer, Styren-Methacrylsäure-Copolymer, 4-Vinylanilin-Acrylsäure-Copolymer, 4-Vinylanilin-Methacrylsäure-Copolymer und Kombinationen derselben besteht.

4. Das Farbmittel gemäß Anspruch 1, bei dem das Polymer durch eine Bindungsgruppe an das Pigment angelagert ist.

5. Das Farbmittel gemäß Anspruch 1, das ferner einen kovalent an das Polymer angelagerten zweiten Farbstoff umfasst.

6. Das Farbmittel gemäß Anspruch 5, bei dem der zweite Farbstoff eine andere Farbe aufweist als der erste Farbstoff.

7. Das Farbmittel gemäß Anspruch 1, bei dem das Pigment eine andere Farbe aufweist als der erste Farbstoff.

8. Das Farbmittel gemäß Anspruch 1, bei dem das Dispersionsmittel an das Pigment angelagert ist.

9. Das Farbmittel gemäß Anspruch 1, bei das Dispersionsmittel an das Polymer angelagert ist.

10. Das Farbmittel gemäß Anspruch 1, bei dem das polymere Farbmittel ein Verhältnis von Farbstoffmolekülen pro Gewicht eines Pigmentpartikels von etwa 10 µmol pro Gramm bis etwa 100 mMol pro Gramm aufweist.

11. Das Farbmittel gemäß Anspruch 1, das ferner einen stabilisierenden Zusatzstoff umfasst.

12. Ein Tintenstrahlsystem, das folgende Merkmale aufweist:
a) eine Tintenstrahltintenzusammensetzung, die folgende Merkmale umfasst:
i) ein Flüssigträgermittel;
ii) einen an ein Polymer angelagerten Farbstoff, der einen Farbstoff umfasst, der kovalent an ein Polymer angelagert ist, wobei der Farbstoff eine erste Farbe aufweist; und
iii) ein Pigment, das eine zweite Farbe aufweist, die einen wesentlich anderen Farbton aufweist als die erste Farbe; und
b) einen Tintenstrahlstift, der eine Abfeuerungskammer umfasst, die die Tintenstrahltintenzusammensetzung enthält.

13. Das System gemäß Anspruch 12, bei dem das Pigment Polymer-dispergiert ist.

14. Das System gemäß Anspruch 12, bei dem das Pigment kovalent an das Polymer angelagert ist, um ein polymeres Farbmittel zu bilden.

15. Das System gemäß Anspruch 12, das ferner zumindest zwei verschiedene Farbstoffe umfasst, die kovalent an das Polymer angelagert sind.

16. Ein Verfahren zum Bilden eines polymeren Farbmittels, das folgende Schritte umfasst:
a) Anlagern eines Farbstoffs an ein Polymer, um ein Polymer/Farbstoff-Farbmittel zu bilden;
b) Anlagern des Polymers an ein Pigment; und
c) Anlagern eines Dispersionsmittels an zumindest entweder das Polymer/Farbstoff-Farbmittel und/oder das Pigment.

17. Das Verfahren gemäß Anspruch 16, bei dem das Polymer eine Anhydridgruppe umfasst, die für eine Reaktion mit der reaktiven Gruppe konfiguriert ist.

18. Das Verfahren gemäß Anspruch 16, bei dem das Dispersionsmittel an das Polymer oder das Pigment angelagert wird, bevor der Farbstoff an das Polymer angelagert wird.

19. Das Verfahren gemäß Anspruch 16, bei dem der Farbstoff an das Polymer angelagert wird, bevor das Polymer an das Pigment angelagert wird.

## Revendications

1. Colorant polymère comprenant :
a) un pigment auquel un polymère est attaché de manière covalente ;
b) un premier colorant attaché de manière covalente au polymère ; et
c) un dispersant attaché de manière covalente à au moins un élément parmi le pigment, le polymère et le premier colorant.

2. Colorant selon la revendication 1, dans lequel le polymère est un élément choisi dans le groupe consistant en les copolymères d'anhydride maléique, les copolymères acryliques, les copolymères méthacryliques, les copolymères contenant des alcools ou des amines et leurs mélanges.

3. Colorant selon la revendication 1, dans lequel le polymère est choisi dans le groupe consistant en le copolymère styrène-anhydride maléique, le copolymère méthyle vinyle éther-anhydride maléique, le copolymère vinyle pyrrolidone-anhydride maléique, le copolymère styrène acide acrylique, le copolymère styrène acide méthacrylique, le copolymère 4-vinylaniline-acide acrylique, le copolymère 4-vinylaniline-acide méthacrylique et leurs mélanges.

4. Colorant selon la revendication 1, dans lequel le polymère est attaché au pigment par un groupe de liaison.

5. Colorant selon la revendication 1, comprenant également un second colorant attaché de manière covalente au polymère.

6. Colorant selon la revendication 5, dans lequel le second colorant est d'une couleur différente de celle du premier colorant.

7. Colorant selon la revendication 1, dans lequel le pigment est d'une couleur différente de celle du premier colorant.

8. Colorant selon la revendication 1, dans lequel le dispersant est attaché au pigment.

9. Colorant selon la revendication 1, dans lequel le dispersant est attaché au polymère.

10. Colorant selon la revendication 1, dans lequel le colorant polymère présente un rapport de molécules de colorant par poids de particule de pigment compris entre environ 10 µmoles par gramme et environ 100 mmoles par gramme.

11. Colorant selon la revendication 1, comprenant également un additif stabilisateur.

12. Système d'impression jet d'encre, comprenant :
a) une composition d'encre pour impression jet d'encre, incluant :
i) un véhicule liquide ;
ii) un colorant attaché à un polymère comprenant un colorant attaché de manière covalente à un polymère, ledit colorant ayant une première couleur ; et
iii) un pigment ayant une seconde couleur, qui a une teinte sensiblement différente de celle de la première couleur ; et
b) un stylo à jet d'encre comprenant une chambre d'encrage contenant la composition d'encre pour stylo à jet d'encre.

13. Système selon la revendication 12, dans lequel le pigment est dispersé dans un polymère.

14. Système selon la revendication 12, dans lequel le pigment est attaché de manière covalente au polymère pour former un colorant polymère.

15. Système selon la revendication 12, comprenant également au moins deux colorants différents attachés de manière covalente au polymère.

16. Procédé de formation d'un colorant polymère, comprenant les étapes consistant à :
a) attacher un colorant à un polymère pour former un colorant polymère ;
b) attacher le polymère à un pigment ; et
c) attacher un dispersant à au moins un élément parmi le colorant polymère et le pigment.

17. Procédé selon la revendication 16, dans lequel ledit polymère comporte un groupement anhydride configuré pour réagir avec le groupement réactif.

18. Procédé selon la revendication 16, dans lequel le dispersant est attaché au polymère ou au pigment avant d'attacher le colorant au polymère.

19. Procédé selon la revendication 16, dans lequel le colorant est attaché au polymère avant d'attacher le polymère au pigment.
